# EUROPEAN PATENT SPECIFICATION

(11) **EP 3 994 691 B1**
(45) Date of publication and mention of the grant of the patent: **29.05.2024**
(21) Application number: 19936268.2
(22) Date of filing: 03.07.2019
(51) Int. Cl.: G10L 21/0208, G10L 21/0216

(54) **AUDIO SIGNAL DEREVERBERATION**
ENTSCHALLUNG VON AUDIOSIGNALEN
DÉRÉVERBÉRATION DE SIGNAL AUDIO

(43) Date of publication of application: 11.05.2022
(73) Proprietor: Hewlett-Packard Development Company, L.P., Spring TX 77389 (US)
(72) Inventor: KUTHURU, Srikanth, Palo Alto, California 94304-1100 (US); BHARITKAR, Sunil, Palo Alto, California 94304-1100 (US); ATHREYA, Madhu Sudan, Palo Alto, California 94304-1100 (US)
(74) Representative: Hoffmann Eitle
(86) International application number: PCT/US2019/040557
(87) International publication number: WO 2021/002864

(56) References cited:
- US-A1- 2015 012 268
- US-A1- 2016 203 828
- US-A1- 2018 190 308
- US-A1- 2019 028 829
- US-A1- 2019 088 269

## Description

### BACKGROUND

Video conferencing systems can be used for communication between parties in different locations. A video conferencing system at a near-end can capture audio-video information at the near-end and transmit the audio-video information to a far-end. Similarly, a video conferencing system at the far-end can capture audio-visual information at the far-end and transmit the audio-visual information to the near-end. US20160203828 discloses a speech processing device with a reverberation suppression technique. US2019002889 discloses a mechanism for facilitating multi-modal dereverberation in far-field audio systems.

### SUMMARY OF INVENTION

The scope of the invention is defined by the appended claims.

### BRIEF DESCRIPTION OF THE DRAWINGS

FIG. 1 illustrates an example of a video conference system in a near-end room that includes a plurality of individuals in accordance with the present disclosure;
FIG. 2 illustrates an example of a technique for performing dereverberation for an audio signal in accordance with the present disclosure;
FIG. 3 illustrates an example of a video conferencing system and related operations for performing dereverberation in accordance with the present disclosure;
FIG. 4 is a flowchart illustrating an example method of performing dereverberation in a video conference system in accordance with the present disclosure;
FIG. 5 is a flowchart illustrating another example method of performing dereverberation in a video conference system in accordance with the present disclosure; and
FIG. 6 is a block diagram that provides an example illustration of a computing device that can be employed in the present disclosure.

### DETAILED DESCRIPTION

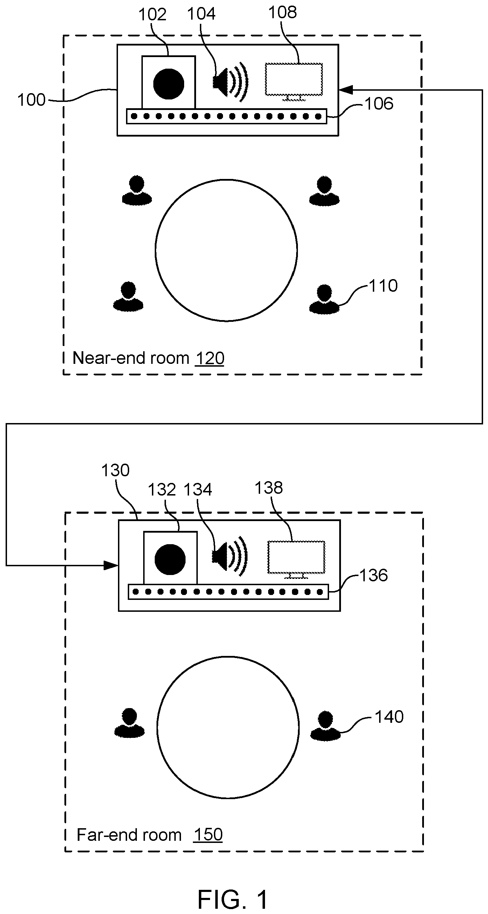

Turning now to the FIGS., FIG. 1 illustrates an example of a video conference system 100 in a near-end room 120 that includes a plurality of persons 110. The video conferencing system 100 can include a camera 102 to capture camera information for the near-end room 120. For example, the camera 102 can capture video of the persons 110 in the near-end room 120. The video captured in the near-end room 120 can be converted to a video signal, and the video signal can be transmitted to a far-end room 150. The video conference system 100 can include a speaker (or loudspeaker) 104. The speaker 104 can receive an audio signal from the far-end room 150 and produce a sound based on the audio signal. The video conference system 100 can include a microphone 106 to capture audio in the near-end room 120. For example, the microphone 106 can capture audio spoken by a person 110 in the near-end room 120. The audio captured in the near-end room 120 can be converted to an audio signal, and the audio signal can be transmitted to the far-end room 150. In addition, the video conference system 100 can include a display 108 to display a video signal received from the far-end room 150.

In one example, the far-end room 150 can include a video conferencing system 130. The video conferencing system 130 can include a camera 132 to capture camera information for the far-end room 150. For example, the camera 132 can capture video of the persons 140 in the far-end room 160. The video captured in the far-end room 150 can be converted to a video signal, and the video signal can be transmitted to the near-end room 120. The video conferencing system 130 can include a speaker 134, which can receive the audio signal from the near-end room 120 and produce a sound based on the audio signal. The video conferencing system 130 can include a microphone 136 to capture audio in the far-end room 150. For example, the microphone 136 can capture audio spoken by a person 140 in the far-end room 150. The audio captured in the far-end room 150 can be converted to an audio signal, and the audio signal can be transmitted to the near-end room 120. In addition, the video conferencing system 130 can include a display 138 to display the video signal received from the near-end room 120.

In the example shown in FIG. 1, the video conference system 100 in the near-end room 120 and the video conference system 130 in the far-end room 150 can enable the persons 110 in the near-end room 120 to communicate with the persons 140 in the far-end room 150. For example, the persons 110 in the near-end room 120 may be able to see and hear the persons 140 in the far-end room 150, based on audio-video information that is communication between the video conference system 100 in the near-end room 120 and the video conference system 130 in the far-end room 150. In this non-limiting example, the near-end room 120 can include four persons and the far-end room 150 can include two persons, but other numbers of persons can be present in the near-end room 120 and the far-end room 150.

In one example, the microphone 106 that captures the audio spoken by the person 110 in the near-end room 120 can be a microphone array. The microphone array can include a plurality of microphones placed at different spatial locations. The microphone array can capture the audio spoken by the person 110 in the near-end room 120 using beamforming. The different spatial locations of the microphones in the microphone array that capture the audio spoken by the person 110 can produce beamforming parameters. A signal strength of signals emanating from particular directions in the near-end room 120, such as a location of the person 110 in the near-end room 120, can be increased based on the beamforming parameters. A signal strength of signals (e.g., due to noise) emanating from other directions in the near-end room 120, such as a location that is different than the location of the person 110 in the near-end room 120, can be combined in a benign or destructive manner based on the beamforming parameters, resulting in degradation of the signals to/from the location that is different than the location of the person 110 in the near-end room 120. As a result, by using sound propagation principles, the microphone array can provide an ability to augment signals emanating from a particular direction in the near-end room 120 based on knowledge of the particular direction.

In one example, beamforming techniques using a microphone array can adaptively track active persons and listen to sound in direction(s) of the active persons, and suppress sound (or noise) coming from other directions. Beamforming using a microphone array can augment a sound quality of received speech by increasing a gain of an audio signal in the active person's direction and reducing a number of far-end speaker echoes received at microphone(s) of the microphone array. In other words, by changing a gain and a phase delay for a given microphone output in the microphone array, a sound signal from a specific direction can be amplified by constructive interference and sound signals in other directions can be attenuated by destructive interference. The gain(s) and phase delay(s) for microphone(s) in the microphone array can be considered to be the beamforming parameters. Further, since the gain and the phase delay for the given microphone output can vary based on the location of the person 110, the beamforming parameters can also depend on the location of the person 110.

Further, beamforming techniques using a microphone array can be classified as data-independent or fixed, or data-dependent or adaptive. For data-independent or fixed beamforming techniques, beamforming parameters can be fixed during operation. For data-dependent or adaptive beamforming techniques, beamforming parameters can be continuously updated based on received signals. Examples of fixed beamforming techniques can include delay-sum beamforming, sub-array delay sum beamforming, super-directivity beamforming or near-field super-directivity beamforming. Examples of adaptive beamforming techniques can include generalized side-lobe canceler beamforming, adaptive microphone-array system for noise reduction (AMNOR) beamforming or post-filtering beamforming.

In one example, the person 110 in the near-end room 120 can speak, and the corresponding sound can be captured using the microphone 106 of the video conferencing system 100 in the near-end room 120. The sound captured using the microphone 106 can be subject to reverberation, which can be a persistence of sound after the sound is produced. The reverberation can be created when the sound is reflected, which can cause a number of reflections to build up and then decay as the sound is absorbed by surfaces or objects in the near-end room 120, which can include furniture, people, air, etc. The effect of reverberation can be noticeable when the sound from the person 110 stops, but the reflections continue, thereby producing the persistence of the sound. The reverberation can be present in indoor spaces, but can also exist in outdoor environments where reflection exists. A level of reverberation can depend in part on a distance between the person 110 and the microphone 106. For example, an increased distance between the person 110 and the microphone 106 can cause an increased level of reverberation, while a decreased distance between the person 110 and the microphone 106 can cause a decreased level of reverberation.

In one example, the sound captured by the microphone 106 (which includes the reverberation) can be transmitted as the audio signal to the video conferencing system 130 in the far-end room 150. The audio signal can be used to produce the sound at the speaker 134 of the video conferencing system 130 in the far-end room 150. However, the sound produced at the speaker 134 can include the reverberation that was created in the near-end room 120. Thus, the reverberation can reduce speech intelligibility in the sound or speech from the person 110 in the near-end room 120, when heard or listened to the person 140 in the far-end room 150.

In one example, dereverberation can be used to reduce the level of reverberation in the audio signal being transmitted from the video conferencing system 100 in the near-end room 120 to the video conferencing system 130 in the far-end room 150. The dereverberation can remove the effects of reverberation in sound and mitigate contamination in the sound, after the sound has been picked up or detected by the microphone 106 of the video conferencing system 100 in the near-end room 120. The audio signal transmitted from the video conferencing system 100 in the near-end room 120 can be a near-end speech signal, which can derive from the audio signal that is captured at the near-end room 120 with the microphone array using beamforming. The dereverberation can be applied on the near-end speech signal, such that the reverberation can be removed from the audio signal. An audio signal that comprises the near-end speech signal (i.e., an audio signal in which the dereverberation has been applied) can be transmitted to the video conferencing system 130 in the far-end room 150.

In one example, various approaches can be used to achieve dereverberation. For example, reverberation can be reduced or cancelled by using a mathematical model of an acoustic system (or room) and, after estimation of room acoustic model parameters, an estimate of an original signal can be determined. In another example, reverberation can be suppressed by treating the reverberation as a type of (convolutional) noise and performing a de-noising process specifically adapted to reverberation. In yet another example, an original dereverberated signal can be estimated from microphone signals using, for example, a deep neural network machine learning approach.

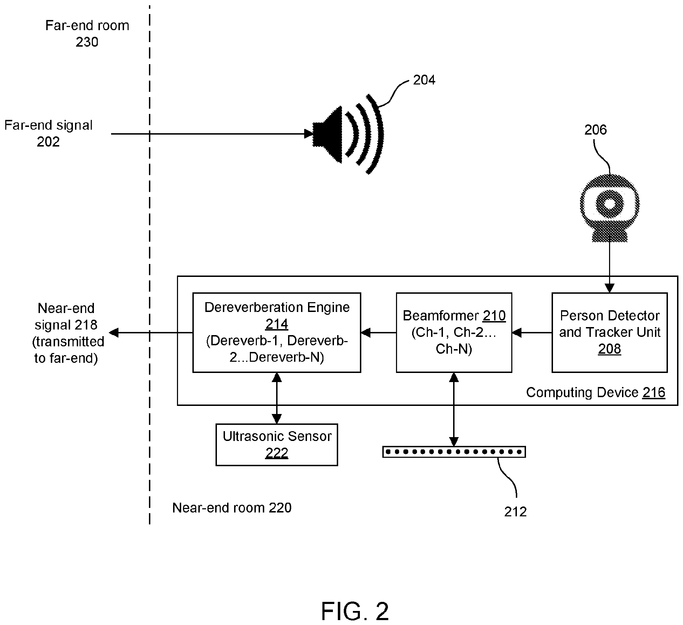

FIG. 2 illustrates an example of a technique for performing dereverberation for an audio signal in accordance with the present disclosure. The dereverberation can be performed using a computing device 216 in a near-end room 220. The computing device 216 can be part of a video conferencing system that captures audio-video at the near-end room and transmits the audio-video to a far-end room 230. The computing device 216 may include, or be coupled to, a speaker 204 (or loudspeaker), a camera 206 such as a stereo camera, a structured light sensor camera or a time-of-flight camera, and a microphone array 212. In other words, the speaker 204, the camera 206 and the microphone array 212 can be integrated with the computing device 216, or can be separate units that are coupled to the computing device 216.

In one example, the camera 206 can capture camera information for the near-end room 200. The camera information can be digital images and/or digital video of the near-end room 200. The camera information can be provided to a person detector and tracker unit 208 that operates on the computing device 216. The person detector and tracker unit 208 can analyze the camera information using object detection, which can include facial detection. The person detector and tracker unit 208 can also analyze the camera information using depth estimation, which can rely on a relative scale of objects in an image. Based on the camera information, the person detector and tracker unit 208 can determine a number of persons in the near-end room 220, as well as a location of a person in the near-end room 220. The location of the person in the near-end room 220 can be used to determine a distance between the person and the microphone array 212. The person(s) that are detected in the near-end room 220 based on the camera information can include a person that is currently speaking or a person that is not currently speaking (e.g., a person in the near-end room 220 that is listening to another person who is speaking).

In one example, the location of the person can be a relative location with respect to the number of persons in the near-end room 220. The relative location of the person can imply a relative position of the person or persons with respect to the microphones in the microphone array 212. The relative location can be determined based upon determining a camera position relative to the microphones in the microphone array 212. The camera position relative to the microphones in the microphone array 212 can be determined manually or using object detection. The camera position can be determined once or periodically, as the camera 206 and the microphones in the microphone array 212 can be stationary or semi-stationary.

As a non-limiting example, based on camera information captured using the camera 206, the person detector and tracker unit 208 can detect that there are four persons in the near-end room 220. Further, based on the camera information, the person detector and tracker unit 208 can determine that a first person is at a first location in the near-end room 220, a second person is at a second location in the near-end room 220, a third person is at a third location in the near-end room 220, and a fourth person is at a fourth location in the near-end room 220.

In one example, the person detector and tracker unit 208 can track persons in the near-end room 220 over a period of time. The person detector and tracker unit 208 can run when a level of variation in incoming video frames are above a defined threshold. For example, the person detector and tracker unit 208 can run during a beginning of a videoconference call when persons enter the near-end room 220 and settle down in the near-end room 220, and the person detector and tracker unit 208 can run at a reduced mode when persons are less likely to move in the near-end room 220 and therefore maintain a direction with respect to the microphone array 212.

In one example, the person detector and tracker unit 208 can provide person location information to a beamformer 210 that operates on the computing device 216. The person location information can indicate the location of the person in the near-end room 220. The beamformer 210 can be a fixed beamformer (e.g., a beamformer that performs delay-sum beamforming) or an adaptive beamformer. The beamformer 210 can be coupled to the microphone array 212. The beamformer 210 and the microphone array 212 can work together to perform beamforming. The beamformer 210 and the microphone array 212 can capture an audio signal received from the location of the person in the near-end room 220. For example, when the person in the near-end room 220 speaks, and the location of that person is established based on the person location information, the beamformer 210 and the microphone array 212 can capture the audio signal received from the location of the person in the near-end room 220. The audio signal can be captured using beamforming parameters, where the beamforming parameters can be set based on the location of the person in the near-end room.

In one example, the audio signal captured at the microphone 212 using the beamformer 210 can be subjected to reverberation. For example, the audio signal captured at the microphone 212 can include reverberation due to a persistence of sound in the near-end room 220. The reverberation can be created when the sound is reflected, which can cause a number of reflections to build up and then decay as the sound is absorbed by surfaces or objects in the near-end room 220. The beamformer 210 can provide the audio signal having the reverberation to a dereverberation engine 214 that operates on the computing device 216. In other words, an output of the beamformer 210 can be an input to the dereverberation engine 214.

In one example, the dereverberation engine 214 can determine room properties of the near-end room 220. The room properties can include room boundary/surface reflectances, room geometries, etc. The dereverberation engine 214 can determine dereverberation parameter(s) based on the person location information which indicates the location of the person in the near-end room 220, as well as the room properties of the near-end room 220. In other words, the dereverberation parameter(s) can be set based on the determined location of the person in the near-end room 220, where the location can indicate a distance between the person and the microphone array 212. Further, the dereverberation parameter(s) can be set based on the room properties, such as the room boundary/surface reflectances, room geometries, etc.

In one example, the location of the person in the near-end room 220 and the room properties can be provided to a machine learning model, and the dereverberation parameter(s) can be determined using the machine learning model. In other words, the location of the person in the near-end room 220 and the room properties can be provided as an input to the machine learning model, and the dereverberation parameter(s) can be an output of the machine learning model.

In one example, the dereverberation parameter(s) can be applied to the audio signal received from the location of the person in the near-end room 220, thereby producing an audio signal with a reduced reverberation. In other words, the dereverberation parameter(s) can be applied to reduce the reverberation caused by the reflections in the near-end room 220, which can produce a resulting audio signal that is less affected by the reverberation. The resulting audio signal can be a near-end signal 218 that is transmitted to the far-end room 230. Since the dereverberation has been applied to the near-end signal 218 to reduce reverberation, the near-end signal 218 can be of increased sound quality.

Similarly, dereverberation parameter(s) can be determined and applied at the far-end room 230. Thus, dereverberation parameter(s) can be applied to the far-end signal 202, and then the far-end signal 202 can be transmitted to the near-end room 220. Since the dereverberation has been applied to the far-end signal 202 to reduce reverberation, the far-end signal 202 can be of increased sound quality.

In one configuration, the dereverberation engine 214 can determine the room properties based in part on a data output received from an ultrasonic sensor 222 that is communicatively coupled to the dereverberation engine 214. The ultrasonic sensor 222 may perform a signal sweep of the near-end room 220. For example, the ultrasonic sensor 222 can perform the signal sweep of the near-end room 220 at an ultrasonic frequency. The ultrasonic frequency can be at a frequency that is higher than an upper audible limit of human hearing. As an example, the ultrasonic frequency used by the ultrasonic sensor 222 can be in the range of 20 kilohertz (kHz) to several gigahertz. The ultrasonic sensor 222 can perform the signal sweep of the near-end room 220 in order to detect objects and measure distances in the near-end room 220, which can correspond to the data output. The data output can be used, along with information from the camera 206, to determine the room properties.

Alternatively, a signal sweep of the near-end room 220 can be an electromagnetic energy sweep using light, radar, sonar, etc.

In a specific example, the ultrasonic sensor 222 may include an ultrasonic signal generator and an electronic beam steering block attached to an array of ultrasonic emitters of the ultrasonic sensor 222. The ultrasonic signal generator and the electronic beam steering block attached to the array of ultrasonic emitters can sweep the near-end room 220 at the ultrasonic frequency. The signal sweep can produce the data output, which can be used by the dereverberation engine 214 to compute room boundary/surface reflectances for the near-end room 220. Further, the dereverberation engine 214 can provide the person location(s) detected using the camera 206 and the room boundary/surface reflectances as an input to a trained model, such as a machine learning model. The machine learning model can be trained a priori with room boundary/surface reflectances and person locations relative to boundaries of the room. The machine learning model can receive the input and provide an output of estimated dereverberation parameter(s), which can be applied to achieve the dereverberation.

The dereverberation engine 214 applies the dereverberation parameter to the audio signal when the location of the person in the near-end room 220 satisfies a location criteria. The location criteria is satisfied when a distance between the location of the person in the near-end room 220 and the microphone array 212 is above a defined threshold. For example, the location criteria can be satisfied when the distance is more than 10 feet, more than 15 feet, more than 20 feet, more than 25 feet, and so on. Therefore, the dereverberation parameter can be applied when the person is located at an increased distance from the microphone array 212, and the dereverberation parameter may not be applied when the person is located at decreased distance from the microphone array 212.

In one example, the beamformer 210 can operate with N beams or N channels, wherein N is a positive integer. One channel or one beam can correspond with a person detected using the person detector and tracker unit 208. The dereverberation engine 214 can remove reverberation for the one channel or one beam that corresponds with the detected person.

As a non-limiting example, the person detector and tracker unit 208 can detect three persons in the near-end room 220. In this example, the beamformer 210 can receive an audio signal from a first person in the near-end room 220 using a first beam or channel, an audio signal from a second person in the near-end room 220 using a second beam or channel, and an audio signal from a third person in the near-end room 220 using a third beam or channel. The dereverberation engine 214 can determine that the location of the first person is 15 feet from the microphone array 212 and satisfies the location criteria, but that the locations of the second person and the third person are 5 feet and 6 feet, respectively, and do not satisfy the location criteria. The dereverberation engine 214 can perform dereverberation on the first beam or channel, but not on the second beam or channel and the third beam or channel.

Dereverberation could be applied blindly for both persons in the near-end room 220 and the far-end room 230, which would result in an increased number of computations. Further, a speaker's distance to a microphone array could be estimated based on a speech signal power, where a reduced signal power would imply a speaker at an increased distance from the microphone array, and an increased signal power would imply a speaker at a reduced distance from the microphone array. Depending on whether the speech signal power was reduced or increased, a decision on whether to implement dereverberation could be made. However, this approach would fail when speakers located relatively close to the microphone array would speak with a reduced volume, thereby resulting in a reduced signal power even though the speaker was located relatively close to the microphone array. Similarly, this approach would fail when speakers located relatively far from the microphone array would speak with an increased volume, thereby resulting in an increased signal power even though the speaker was located relatively far from the microphone array.

In the present disclosure, the camera information can be used to determine relative distances between persons (which include speakers) in the near-end room 220. The camera information can be used to more accurately determine the relative distances between the persons in the near-end room 220, as compared to the signal powers which can mistakenly identify a person as being relatively far or relatively close to the microphone array 212. In the present disclosure, the relative distances between the persons can be used to determine whether to apply dereverberation. For example, dereverberation can be applied when a relative distance satisfies the location criteria, and dereverberation may not be applied when a relative distance does not satisfy the location criteria. By selectively applying dereverberation based on the relative distance in relation to the location criteria, computational efficiency and speech quality can be increased.

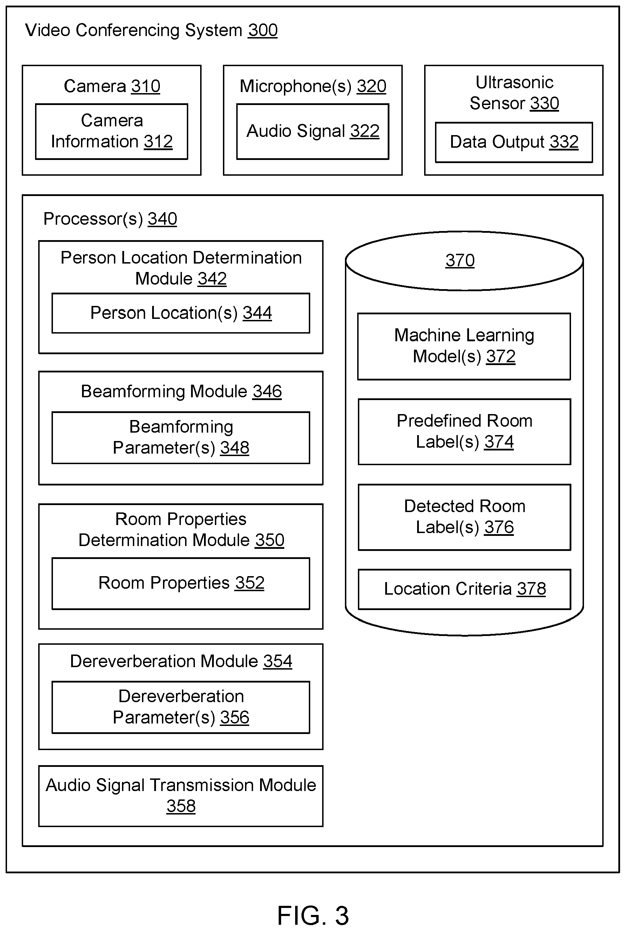

FIG. 3 illustrates an example of a video conferencing system 300 for performing dereverberation. The video conferencing system 300 can be a near-end video conferencing system or a far-end video conferencing system. The video conferencing system 300 can include a camera 310 such as a stereo camera, a structured light sensor camera or a time-of-flight camera, a microphone array 320, an ultrasonic sensor 330, a processor 340 that performs dereverberation on an audio signal 322, and a machine readable storage medium 370 to store a machine learning model 372. One non-limiting example of the processor 340 can be a digital signal processor (DSP).

In one example, the camera 310 can capture camera information 312 for a room. The camera information 312 can include video information of the room, which can include a plurality of video frames. The camera 310 can operate continuously or intermittently to capture the camera information 312 for the room. For example, the camera 310 can operate continuously during the videoconference session, or can operate intermittently during the videoconferencing session (e.g., at a beginning of the videoconferencing session and at defined periods during the videoconferencing session).

In one example, the microphone array 320 can capture the audio signal 322 received from a location of a person in the room. The microphone array 320 can include a plurality of microphones at different spatial locations. The microphones in the microphone array 320 can be omnidirectional microphones, directional microphones, or a combination of omnidirectional and directional microphones.

In one example, the ultrasonic sensor 330 can produce a data output 332. The ultrasonic sensor 330 can measure distance by using ultrasonic waves. The ultrasonic sensor 330 can include an ultrasonic element that emits an ultrasonic wave, and the ultrasonic element can receive the ultrasonic wave reflected back from a target. The ultrasonic sensor 330 can measure the distance to the target by measuring a time between an emission of the ultrasonic wave and a reception of the reflected ultrasonic wave. The distance to the target can be included in the data output 332 of the ultrasonic sensor 330.

In one example, the processor 340 can include a person location determination module 342. The person location determination module 342 can determine person location(s) 344 based on the camera information 312. For example, the person location determination module 342 can analyze the camera information 312 using depth estimation, object detection, facial recognition, or like techniques to determine a number of persons in the room and a location of a specific person in the number of persons in the room. The person location(s) 344 can be relative locations with respect to locations of other persons in the room.

In one example, the processor can include a beamforming module 346. The beamforming module 346 can perform beamforming to capture the audio signal 322 received from the location of the person using the microphone array 320. In one example, the beamforming module 346 can use a fixed beamforming technique, such as delay-sum beamforming, sub-array delay sum beamforming, super-directivity beamforming or near-field super-directivity beamforming. In another example, the beamforming module 346 can use an adaptive beamforming technique, such as generalized side-lobe canceler beamforming, AMNOR beamforming or post-filtering beamforming.

In one example, the beamforming module 346 can capture the audio signal 322 received from the location of the person using beamforming parameters 348, where the beamforming parameters 346 can be based on the location of the person in the room. In other words, the person location 344 can be determined using the camera information 312, and the person location 344 can be used to set or adjust the beamforming parameters 348. Based on the beamforming parameters 348, the audio signal 322 can be captured from the location of the person.

In one example, the processor 340 can include a room properties determination module 350 to determine room properties 352 of the room. The room properties 352 can include room boundary/surface reflectances and/or room geometries. In one example, the room boundary/surface reflectances can indicate an effectiveness of a surface of a material in reflecting sound, where the surface can be included in the room. The surface can be, but is not limited to, a glass surface, a metal surface, a wood surface, a cotton surface, a carpet surface, a concrete surface, a plastic surface, a paper surface, a ceramic surface, etc. The surface can be a wall or boundary of the room. Therefore, the room boundary/surface reflectances can include a reflectance of a glass surface, a reflectance of a metal surface, and so on. Thus, the reflectance can vary depending on the type of surface. In another example, the room geometries can indicate a shape, size and relative arrangement of the room. For example, the room geometries can indicate whether the room is rectangular, circular, oval, square, etc. The room geometries can indicate the size of the room, which can imply whether the room is an office, a conference room, a hall, etc.

In one example, the room properties determination module 350 can determine the room properties 352 based on the camera information 312 and the data output 332 received from the ultrasonic sensor 330. The camera information 312 can be analyzed using object detection, computer vision (e.g., Harris Corner detection), depth estimation, etc. to detect various objects such as furniture, windows, etc., surfaces, persons, walls, etc. in the room, as well as a number of persons in the room and the person location(s) 344. Further, the ultrasonic sensor 330 can perform an ultrasonic signal sweep of the room and produce the data output 332, which can include distance(s) to the various objects, surfaces, persons, walls, etc. in the room. Thus, the room properties 352 including the room boundary/surface reflectances can be determined based on the determined distance(s) from the ultrasonic signal sweep in combination with the camera information 312.

In another example, infrared time of light sensor(s) can be used as an alternative to the ultrasonic sensor 330 for distance estimation of the various objects, surfaces, persons, walls, etc. in the room. For example, the infrared time of light sensor(s) can emit infrared signals in the room, and based on an amount of time taken for light to be emitted and subsequently detected, the distances can be estimated. The determined distances can be used to determine the room properties 352 including the room boundary/surface reflectances.

In one configuration, a dereverberation module 354 can provide the room properties 352 and the person location(s) 344 to the machine learning model 372. The machine learning model 372 can be previously trained to classify room properties 352 and person locations 344 relative to room boundaries/surfaces. For example, the machine learning model 372 can be trained to classify various kinds of reflecting surfaces (e.g., metal, wood, concrete), room geometries, room boundaries/surface and acoustics, positions or locations of speakers relative to room boundaries and surfaces that reflect sound, etc. The dereverberation module 354 can determine, using the machine learning model 372, dereverberation parameter(s) 356 to be applied to the audio signal 322 based on the room properties 352 and the person location(s) 344. In other words, the room properties 352 and the person location(s) 344 can be provided as an input to the machine learning model 372, and the dereverberation parameter(s) 356 can be an output of the machine learning model 372.

As a non-limiting example, the dereverberation module 354 can provide an input that indicates a room has glass walls and carpet flooring, and that a speaker is located adjacent to the walls. Based on this input, the dereverberation module 354 can determine, using the machine learning model 372, that a specific dereverberation parameter 356 is to be applied to the audio signal 322 to reduce reverberation in the audio signal 322. As another non-limiting example, the dereverberation module 354 can provide an input that indicates a room has concrete walls, and that a speaker is located in a center of the room. Based on this input, the dereverberation module 354 can determine, using the machine learning model 372, that a specific dereverberation parameter 356 is to be applied to the audio signal 322 to reduce reverberation in the audio signal 322.

As an example, the machine learning model 372 can be generated using supervised learning, unsupervised learning or reinforcement learning. The machine learning model 372 can apply feature learning, sparse dictionary learning, anomaly detection, decision trees, association rules, heuristic rules, etc. to improve a performance of the machine learning model 372 over time. In addition, the machine learning model 372 may incorporate statistical models (e.g., regression), principal component analysis, deep neural networks, or a type of artificial intelligence (Al).

In one example, the dereverberation module 354 can perform dereverberation on the audio signal 322 using the dereverberation parameter(s) 356. For example, the dereverberation module 354 can apply the dereverberation parameter(s) 356 to the audio signal 322 to reduce the dereverberation in the audio signal 322. The dereverberation module 354 applies the dereverberation parameter(s) 356 to the audio signal 322 when a location criteria 378 is satisfied. The location criteria 378 is satisfied when a distance between the person location 344 and the microphone 320 is above a defined threshold, and the location criteria 378 may not be satisfied when a distance between the person location 344 and the microphone 320 is below a defined threshold.

In one example, the processor 340 can include an audio signal transmission module 358. The audio signal transmission module 358 can receive the audio signal 322 having the reduced dereverberation from the dereverberation module 354. The audio signal transmission module 358 can transmit the audio signal having the reduced dereverberation to, for example, a remote video conferencing system.

In one configuration, the room properties determination module 350 can determine the room properties 352 including the room surface reflectances (or room surface reflectance properties) using predefined room labels 374 that are stored in the machine readable storage medium 370. The predefined room labels 374 may include a data sample that has been tagged with a label. In other words, unlabeled data can be tagged with informative tags to produce labeled data. The predefined room labels 374 can correspond to potential objects or surfaces in a room, such as chairs, tables, mirrors, artwork, rugs, windows, tiles, glass windows, concrete walls, etc. A predefined room label 374 for a given object can correspond with a predetermined room surface reflectance. The room properties determination module 350 can compare the data output 332 from the ultrasonic signal sweep of the room and the camera information 312 to the predefined room labels 374 to determine the room properties 352. In other words, the room properties determination module 350 can compare or map the predefined room labels 374 (or manual surface texture labels) to room surfaces having acoustic reflectance parameters (as indicated in the camera information 312 and/or the data output 332) in order to determine the room properties 352.

In one configuration, the room properties determination module 350 can determine the room properties 352 including the room surface reflectances (or room surface reflectance properties) using detected room labels 376 that are stored in the machine readable storage medium 370. The detected room labels 376 may be generated using an infrared light emitting diode (IR LED) or laser emitter and the camera 310 (or a pair of IR LED/laser emitters and cameras). In this case, the detected room labels 376 generated using the LED/laser emitter and camera can be considered as a truth source. The room properties determination module 350 can compare the data output 332 from the ultrasonic signal sweep of the room and the camera information 312 to the detected room labels 376 to determine the room properties 352. In other words, the room properties determination module 350 can compare or map the detected room labels 376 (or detected surface texture labels) to room surfaces having acoustic reflectance parameters (as indicated in the camera information 312 and/or the data output 332) in order to determine the room properties 352.

In one configuration, the room properties determination module 350 can determine the room properties 352 including the room surface reflectances (or room surface reflectance properties) using a separate machine learning model 372. In one example, the separate machine learning model 372 can be a deep learning model that is trained to detect and classify surfaces based on signal sweep data and camera data that indicates person locations. The room properties determination module 350 can provide the data output 332 from the ultrasonic signal sweep of the room and the camera information 312 to the separate machine learning model 372 to determine the room properties 352.

In one configuration, spatial audio techniques can be used to create a directional sound at a far-end video conferencing system by collecting information from a near-end. A far-end device can be a sound bar or a headset, for which directional sounds can be created. For sound bars, beamforming can be used to create the directional sounds. For headsets, head related transfer functions (HTRF) can be used to create the directional sounds. A person direction at the near-end can be estimated by using the camera information 312, and an average position of the person can be selected to accommodate for minor movements of the person at the near-end. Information about the person direction and the average position of the person can be sent from the video conferencing system 300 at the near-end to the far-end video conferencing system to enable the directional sound to be created. By selecting the average position of the person, a loudspeaker beamformer or HTRF spatial audio renderer at the far-end video conferencing system may not continuously change parameters, thereby saving computations at the far-end video conferencing system.

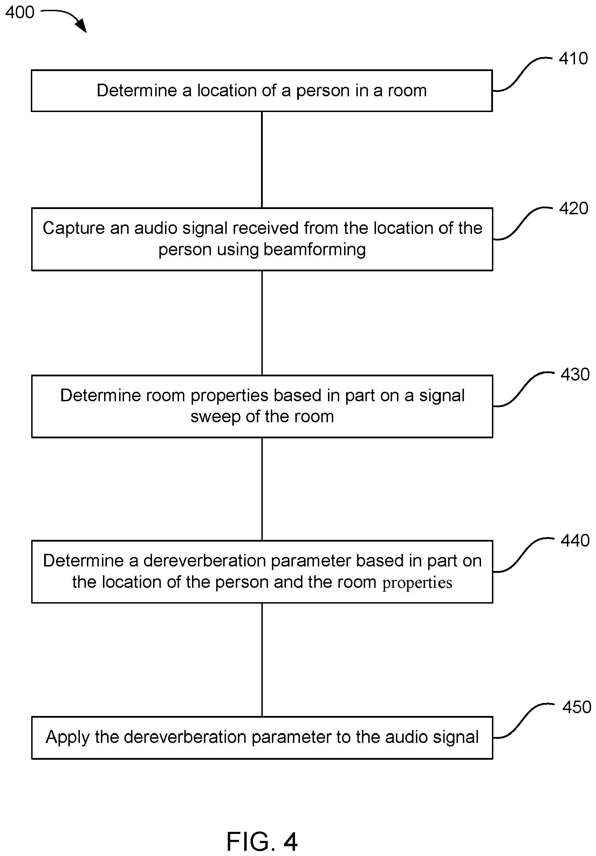

FIG. 4 is a flowchart illustrating one example method 400 of performing dereverberation in a video conference system. The method can be executed as instructions on a machine, where the instructions can be included on a non-transitory machine readable storage medium. The method can include determining a location of a person in a room, as in block 410. The method can include capturing an audio signal received from the location of the person using beamforming, as in block 420. The method can include determining room properties based in part on a signal sweep of the room, as in block 430. The method can include determining a dereverberation parameter based in part on the location of the person and the room properties, as in block 440. The method can include applying the dereverberation parameter to the audio signal, as in block 450. In one example, the method 400 can be performed using the video conferencing system 300, but the method 400 is not limited to being performed using the video conferencing system 300.

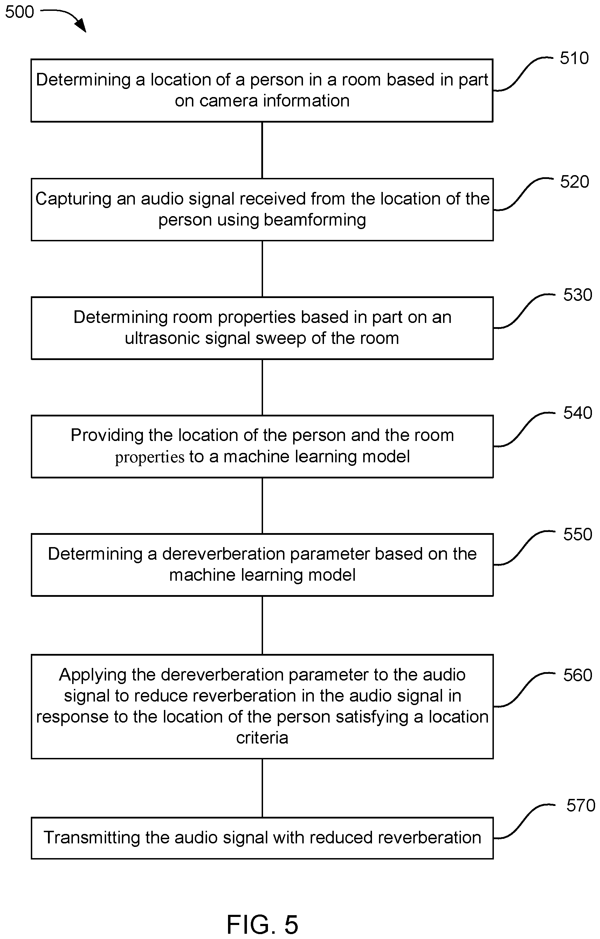

FIG. 5 is a flowchart illustrating one example method 500 of performing dereverberation in a video conference system. The method can be executed as instructions on a machine, where the instructions can be included on a non-transitory machine readable storage medium. The method can include determining a location of a person in a room based in part on camera information, as in block 510. The method can include capturing an audio signal received from the location of the person using beamforming, as in block 520. The method can include determining room properties based in part on an ultrasonic signal sweep of the room, as in block 530. The method can include providing the location of the person and the room properties to a machine learning model, as in block 540. The method can include determining a dereverberation parameter based on the machine learning model, as in block 550. The method can include applying the dereverberation parameter to the audio signal to reduce reverberation in the audio signal in response to the location of the person satisfying a location criteria, as in block 560. The method can include transmitting the audio signal with reduced reverberation, as in block 570. In one example, the method 500 can be performed using the video conferencing system 300, but the method 500 is not limited to being performed using the video conferencing system 300.

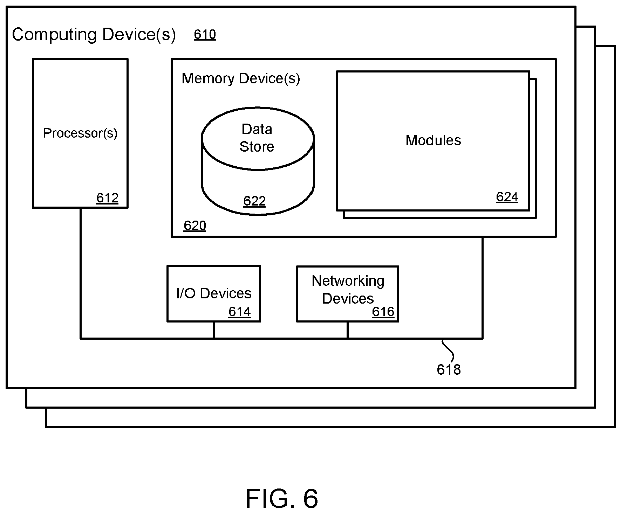

FIG. 6 illustrates a computing device 610 on which modules of this disclosure can execute. A computing device 610 is illustrated on which a high level example of the disclosure can be executed. The computing device 610 can include processor(s) 612 that are in communication with memory devices 620. The computing device can include a local communication interface 618 for the components in the computing device. For example, the local communication interface can be a local data bus and/or a related address or control busses as can be desired.

The memory device 620 can contain modules 624 that are executable by the processor(s) 612 and data for the modules 624. The modules 624 can execute the functions described earlier, such as: determining a location of a person in a room based in part on camera information; capturing an audio signal received from the location of the person using beamforming; determining room properties based in part on an ultrasonic signal sweep of the room; providing the location of the person and the room properties to a machine learning model; determining a dereverberation parameter based on the machine learning model; applying the dereverberation parameter to the audio signal to reduce reverberation in the audio signal in response the location of the person satisfying a location criteria; and transmitting the audio signal with reduced reverberation.

A data store 622 can also be located in the memory device 620 for storing data related to the modules 624 and other applications along with an operating system that is executable by the processor(s) 612.

Other applications can also be stored in the memory device 620 and can be executable by the processor(s) 612. Components or modules discussed in this description that can be implemented in the form of machine-readable software using high programming level languages that are compiled, interpreted or executed using a hybrid of the methods.

The computing device can also have access to I/O (input/output) devices 614 that are usable by the computing devices. An example of an I/O device is a display screen that is available to display output from the computing devices. Networking devices 616 and similar communication devices can be included in the computing device. The networking devices 616 can be wired or wireless networking devices that connect to the internet, a local area network (LAN), wide area network (WAN), or other computing network.

The components or modules that are shown as being stored in the memory device 620 can be executed by the processor 612. The term "executable" can mean a program file that is in a form that can be executed by a processor 612. For example, a program in a higher level language can be compiled into machine code in a format that can be loaded into a random access portion of the memory device 620 and executed by the processor 612, or source code can be loaded by another executable program and interpreted to generate instructions in a random access portion of the memory to be executed by a processor. The executable program can be stored in a portion or component of the memory device 620. For example, the memory device 620 can be random access memory (RAM), read only memory (ROM), flash memory, a solid state drive, memory card, a hard drive, optical disk, floppy disk, magnetic tape, or other memory components.

The processor 612 can represent multiple processors and the memory 620 can represent multiple memory units that operate in parallel to the processing circuits. This can provide parallel processing channels for the processes and data in the system. The local interface 618 can be used as a network to facilitate communication between the multiple processors and multiple memories. The local interface 618 can use additional systems designed for coordinating communication such as load balancing, bulk data transfer, and similar systems.

While the flowcharts presented for this disclosure can imply a specific order of execution, the order of execution can differ from what is illustrated. For example, the order of two more blocks can be rearranged relative to the order shown. Further, two or more blocks shown in succession can be executed in parallel or with partial parallelization. In some configurations, block(s) shown in the flow chart can be omitted or skipped. A number of counters, state variables, warning semaphores, or messages can be added to the logical flow for purposes of enhanced utility, accounting, performance, measurement, troubleshooting or for similar reasons.

Some of the functional units described in this specification have been labeled as modules, in order to more particularly emphasize their implementation independence. For example, a module can be implemented as a hardware circuit comprising custom very-large-scale integration (VLSI) circuits or gate arrays, off-the-shelf semiconductors such as logic chips, transistors, or other discrete components. A module can also be implemented in programmable hardware devices such as field programmable gate arrays, programmable array logic, programmable logic devices or the like.

Modules can also be implemented in machine-readable software for execution by various types of processors. An identified module of executable code can, for instance, comprise block(s) of computer instructions, which can be organized as an object, procedure, or function. Nevertheless, the executables of an identified module need not be physically located together, but can comprise disparate instructions stored in different locations which comprise the module and achieve the stated purpose for the module when joined logically together.

Indeed, a module of executable code can be a single instruction, or many instructions, and can even be distributed over several different code segments, among different programs, and across several memory devices. Similarly, operational data can be identified and illustrated herein within modules, and can be embodied in a suitable form and organized within a suitable type of data structure. The operational data can be collected as a single data set, or can be distributed over different locations including over different storage devices. The modules can be passive or active, including agents operable to perform desired functions.

The disclosure described here can also be stored on a computer readable storage medium that includes volatile and non-volatile, removable and non-removable media implemented with a disclosure for the storage of information such as computer readable instructions, data structures, program modules, or other data. Computer readable storage media can include, but is not limited to, RAM, ROM, electrically erasable programmable read-only memory (EEPROM), flash memory or other memory disclosure, compact disc read-only memory (CD-ROM), digital versatile disks (DVD) or other optical storage, magnetic cassettes, magnetic tapes, magnetic disk storage or other magnetic storage devices, or other computer storage medium which can be used to store the desired information and described disclosure.

The devices described herein can also contain communication connections or networking apparatus and networking connections that allow the devices to communicate with other devices. Communication connections can be an example of communication media. Communication media can embody computer readable instructions, data structures, program modules and other data in a modulated data signal such as a carrier wave or other transport mechanism and can include information delivery media. By way of example, and not limitation, communication media can include wired media such as a wired network or direct-wired connection, and wireless media such as acoustic, radio frequency, infrared, and other wireless media. The term computer readable media as used herein can include communication media.

Reference was made to the examples illustrated in the drawings, and specific language was used herein to describe the same. It will nevertheless be understood that no limitation of the scope of the disclosure is thereby intended. Alterations and further modifications of the features illustrated herein, and additional applications of the examples as illustrated herein, are to be considered within the scope of the description.

Furthermore, the described features, structures, or characteristics can be combined in a suitable manner. In the preceding description, numerous specific details were provided, such as examples of various configurations to provide a thorough understanding of examples of the described disclosure. The disclosure may be practiced without some of the specific details, or with other methods, components, devices, etc. In other instances, some structures or operations are not shown or described in detail to avoid obscuring aspects of the disclosure.

Although the subject matter has been described in language specific to structural features and/or operations, it is to be understood that the subject matter defined in the appended claims is not limited to the specific features and operations described above. Rather, the specific features and acts described above are disclosed as example forms of implementing the claims. Numerous modifications and alternative arrangements can be devised without departing from the scope of the described disclosure.

## Claims

1. A machine readable storage medium comprising instructions that, when executed by a processor, cause the processor to:
determine (410) a location of a person in a room;
capture (420), using a microphone array, an audio signal received from the location of the person using beamforming;
determine (430) room properties based in part on a signal sweep of the room
determine (440) a dereverberation parameter based in part on the location of the person and the room properties;
apply (450) the dereverberation parameter to the audio signal to reduce reverberation in the audio signal in response to the location of the person satisfying a location criteria; and
transmit the audio signal with reduced reverberation;
**characterized in that**
the location criteria is satisfied when a distance between the location of the person in the room and the microphone array is above a defined threshold.

2. The machine readable storage medium of claim 1, wherein the instructions, when executed by the processor, cause the processor to:
provide the location of the person and the room properties to a machine learning model; and
determine the dereverberation parameter using the machine learning model.

3. The machine readable storage medium of claim 1, wherein the signal sweep of the room is performed using an ultrasonic sensor (222, 330) at an ultrasonic frequency.

4. The machine readable storage medium of claim 1, wherein the room properties include room surface reflectances, room geometries, room boundaries, or a combination thereof.

5. The machine readable storage medium of claim 1, wherein the instructions, when executed by the processor, cause the processor to: determine the location of the person relative to a boundary of the room using camera information.

6. The machine readable storage medium of claim 1, wherein the instructions, when executed by the processor, cause the processor to:
compare a data output from the signal sweep of the room and camera information to predefined room labels to determine the room properties; or
compare the data output from the signal sweep of the room and camera information to detected room labels to determine the room properties, wherein the detected room labels are determined using an infrared light emitting diode, IR LED, or laser emitter and a camera; or
provide the data output from the signal sweep of the room and camera information to a machine learning model to determine the room properties, wherein the machine learning model is trained to classify signal sweep data and camera information for determining the room properties.

7. A method (500) for audio signal dereverberation, comprising:
determining (510) a location of a person in a room based in part on camera information;
capturing (520), using a microphone array, an audio signal received from the location of the person using beamforming;
determining (530) room properties based in part on an ultrasonic signal sweep of the room;
providing (540) the location of the person and the room properties to a machine learning model;
determining (550) a dereverberation parameter based on the machine learning model;
applying (560) the dereverberation parameter to the audio signal to reduce reverberation in the audio signal in response the location of the person satisfying a location criteria; and
transmitting (570) the audio signal with reduced reverberation;
**characterized in that**
the location criteria is satisfied when a distance between the location of the person in the room and the microphone array is above a defined threshold.

8. The method of claim 7, wherein the room properties include room surface reflectances, room geometries, room boundaries, or a combination thereof.

9. The method of claim 7, comprising training the machine learning model to determine dereverberation parameters based on relative person locations and room properties.

10. The method of claim 7, comprising:
comparing a data output from the ultrasonic signal sweep of the room to predefined room labels to determine the room properties; or
comparing the data output from the ultrasonic signal sweep of the room to detected room labels to determine the room properties, wherein the detected room labels are determined using an infrared light emitting diode, IR LED, or laser emitter and a camera (102, 132, 206, 310); or
providing the data output from the ultrasonic signal sweep of the room to a machine learning model to determine the room properties, wherein the machine learning model is trained to classify ultrasonic signal sweep data and determine the room properties.

11. A system for audio signal dereverberation, comprising:
a camera (102, 132, 206, 310) configured to capture camera information for a room;
a microphone array (106, 136) configured to capture an audio signal received from a location of a person in the room;
an ultrasonic sensor (222, 330) configured to capture signal sweep information for the room;
a machine readable storage medium configured to store a machine learning model; and
a processor (340) configured to:
determine the location of the person in the room based in part on the camera information;
capture the audio signal received from the location of the person using beamforming;
determine room properties based in part on the signal sweep information;
provide the location of the person and the room properties to the machine learning model;
determine a dereverberation parameter using the machine learning model;
apply the dereverberation parameter to the audio signal to reduce reverberation in the audio signal in response to the location of the person satisfying a location criteria; and
transmit the audio signal with reduced reverberation;
**characterized in that**
the location criteria is satisfied when a distance between the location of the person in the room and the microphone array is above a defined threshold.

12. The system of claim 11, wherein the camera (102, 132, 206, 310) is a stereo camera, a structured light sensor camera, or a time-of-flight camera.

13. The system of claim 11, wherein the system is a video conferencing system.

## Patentansprüche

1. Maschinenlesbares Speichermedium, das Anweisungen umfasst, die, wenn sie durch einen Prozessor ausgeführt werden, den Prozessor veranlassen zum:
Bestimmen (410) eines Standorts einer Person in einem Raum;
Erfassen (420), unter Verwendung einer Mikrofonanordnung, eines Audiosignals, das von dem Standort der Person empfangen wird, unter Verwendung von Strahlformung;
Bestimmen (430) von Raumeigenschaften, zum Teil auf der Basis von einer Signalabtastung des Raums;
Bestimmen (440) eines Enthallungsparameters, zum Teil auf der Basis von dem Standort der Person und den Raumeigenschaften;
Anwenden (450) des Enthallungsparameters auf das Audiosignal, um einen Nachhall in dem Audiosignal als Reaktion darauf zu reduzieren, dass der Standort der Person ein Standortkriterium erfüllt;
und
Übertragen des Audiosignals mit reduziertem Nachhall;
**dadurch gekennzeichnet, dass**
das Standortkriterium erfüllt ist, wenn ein Abstand zwischen dem Standort der Person in dem Raum und der Mikrofonanordnung über einem definierten Schwellenwert liegt.

2. Maschinenlesbares Speichermedium nach Anspruch 1, wobei die Anweisungen, wenn sie durch den Prozessor ausgeführt werden, den Prozessor veranlassen zum:
Bereitstellen des Standorts der Person und der Raumeigenschaften an ein Maschinenlernmodell; und
Bestimmen des Enthallungsparameters unter Verwendung des Maschinenlernmodells.

3. Maschinenlesbares Speichermedium nach Anspruch 1, wobei die Signalabtastung des Raums unter Verwendung eines Ultraschallsensors (222, 330) bei einer Ultraschallfrequenz ausgeführt wird.

4. Maschinenlesbares Speichermedium nach Anspruch 1, wobei die Raumeigenschaften Raumoberflächenreflexionsgrade, Raumgeometrien, Raumabgrenzungen oder eine Kombination davon einschließen.

5. Maschinenlesbares Speichermedium nach Anspruch 1, wobei die Anweisungen, wenn sie durch den Prozessor ausgeführt werden, den Prozessor veranlassen zum: Bestimmen des Standorts der Person relativ zu einer Abgrenzung des Raums unter Verwendung von Kamerainformationen.

6. Maschinenlesbares Speichermedium nach Anspruch 1, wobei die Anweisungen, wenn sie durch den Prozessor ausgeführt werden, den Prozessor veranlassen zum:
Vergleichen einer Datenausgabe von der Signalabtastung des Raums und Kamerainformationen mit vordefinierten Raumetiketten, um die Raumeigenschaften zu bestimmen; oder
Vergleichen der Datenausgabe von der Signalabtastung des Raums und Kamerainformationen mit erkannten Raumetiketten, um die Raumeigenschaften zu bestimmen, wobei die erkannten Raumetikette unter Verwendung einer infrarotlichtemittierenden Diode (Infrared Light Emitting Diode - IR LED) oder eines Laseremitters und einer Kamera bestimmt werden; oder
Bereitstellen der Datenausgabe von der Signalabtastung des Raums und Kamerainformationen an ein Maschinenlernmodell, um die Raumeigenschaften zu bestimmen, wobei das Maschinenlernmodell dazu trainiert ist, Signalabtastungsdaten und Kamerainformationen zum Bestimmen der Raumeigenschaften zu klassifizieren.

7. Verfahren (500) für eine Audiosignalenthallung, das umfasst:
Bestimmen (510) eines Standorts einer Person in einem Raum, zum Teil auf der Basis von Kamerainformationen;
Erfassen (520), unter Verwendung einer Mikrofonanordnung, eines Audiosignals, das von dem Standort der Person empfangen wird, unter Verwendung von Strahlformung;
Bestimmen (530) von Raumeigenschaften, zum Teil auf der Basis von einer Ultraschallsignalabtastung des Raums;
Bereitstellen (540) des Standorts der Person und der Raumeigenschaften an ein Maschinenlernmodell;
Bestimmen (550) eines Enthallungsparameters, auf der Basis von dem Maschinenlernmodell;
Anwenden (560) des Enthallungsparameters auf das Audiosignal, um einen Nachhall in dem Audiosignal als Reaktion darauf zu reduzieren, dass der Standort der Person ein Standortkriterium erfüllt;
und
Übertragen (570) des Audiosignals mit reduziertem Nachhall;
**dadurch gekennzeichnet, dass**
das Standortkriterium erfüllt ist, wenn ein Abstand zwischen dem Standort der Person in dem Raum und der Mikrofonanordnung über einem definierten Schwellenwert liegt.

8. Verfahren nach Anspruch 7, wobei die Raumeigenschaften Raumoberflächenreflexionsgrade, Raumgeometrien, Raumabgrenzungen oder eine Kombination davon einschließen.

9. Verfahren nach Anspruch 7, das ein Trainieren des Maschinenlernmodells, um Enthallungsparameter auf der Basis von relativen Personenstandorten und Raumeigenschaften zu bestimmen, umfasst.

10. Verfahren nach Anspruch 7, das umfasst:
Vergleichen einer Datenausgabe von der Ultraschallsignalabtastung des Raums mit vordefinierten Raumetiketten, um die Raumeigenschaften zu bestimmen; oder
Vergleichen der Datenausgabe von der Ultraschallsignalabtastung des Raums mit erkannten Raumetiketten, um die Raumeigenschaften zu bestimmen, wobei die erkannten Raumetikette unter Verwendung einer infrarotlichtemittierenden Diode (Infrared Light Emitting Diode - IR LED) oder eines Laseremitters und einer Kamera (102, 132, 206, 310) bestimmt werden; oder
Bereitstellen der Datenausgabe von der Ultraschallsignalabtastung des Raums an ein Maschinenlernmodell, um die Raumeigenschaften zu bestimmen, wobei das Maschinenlernmodell dazu trainiert ist, Ultraschallsignalabtastungsdaten zu klassifizieren und die Raumeigenschaften zu bestimmen.

11. System für eine Audiosignalenthallung, das umfasst:
eine Kamera (102, 132, 206, 310), die dazu konfiguriert ist, Kamerainformationen für einen Raum zu erfassen;
eine Mikrofonanordnung (106, 136), die dazu konfiguriert ist, ein Audiosignal, das von einem Standort einer Person in dem Raum empfangen wird, zu erfassen;
einen Ultraschallsensor (222, 330), der dazu konfiguriert ist, Signalabtastungsinformationen für den Raum zu erfassen;
ein maschinenlesbares Speichermedium, das dazu konfiguriert ist, ein Maschinenlernmodell zu speichern; und
einen Prozessor (340), der konfiguriert ist zum:
Bestimmen des Standorts der Person in dem Raum, zum Teil auf der Basis von Kamerainformationen;
Erfassen des Audiosignals, das von dem Standort der Person empfangen wird, unter Verwendung von Strahlformung;
Bestimmen von Raumeigenschaften, zum Teil auf der Basis von den Signalabtastungsinformationen;
Bereitstellen des Standorts der Person und der Raumeigenschaften an das Maschinenlernmodell;
Bestimmen eines Enthallungsparameters unter Verwendung des Maschinenlernmodells;
Anwenden des Enthallungsparameters auf das Audiosignal, um einen Nachhall in dem Audiosignal als Reaktion darauf zu reduzieren, dass der Standort der Person ein Standortkriterium erfüllt;
und
Übertragen des Audiosignals mit reduziertem Nachhall;
**dadurch gekennzeichnet, dass**
das Standortkriterium erfüllt ist, wenn ein Abstand zwischen dem Standort der Person in dem Raum und der Mikrofonanordnung über einem definierten Schwellenwert liegt.

12. System nach Anspruch 11, wobei die Kamera (102, 132, 206, 310) eine Stereokamera, eine Streifenprojektionssensorkamera oder eine Laufzeitkamera ist.

13. System nach Anspruch 11, wobei das System ein Videokonferenzsystem ist.

## Revendications

1. Support de stockage lisible par machine comprenant des instructions qui, lorsqu'elles sont exécutées par un processeur, amènent le processeur à :
déterminer (410) l'emplacement d'une personne dans une pièce ;
capturer (420), à l'aide d'un réseau de microphones, un signal audio reçu en provenance de l'emplacement où se trouve la personne à l'aide de la formation de faisceaux ;
déterminer (430) les propriétés de la pièce basées en partie sur un balayage du signal de la pièce
déterminer (440) un paramètre de déréverbération basé en partie sur l'emplacement de la personne et les propriétés de la pièce ;
appliquer (450) le paramètre de déréverbération au signal audio pour réduire la réverbération dans le signal audio en réponse à l'emplacement de la personne qui satisfait un critère d'emplacement ;
et
transmettre le signal audio avec une réverbération réduite ;
**caractérisé en ce que**
le critère d'emplacement est satisfait lorsqu'une distance entre l'emplacement de la personne dans la pièce et le réseau de microphones est supérieure à un seuil défini.

2. Support de stockage lisible par machine selon la revendication 1, les instructions, lorsqu'elles sont exécutées par le processeur, amenant le processeur à :
fournir l'emplacement de la personne et les propriétés de la pièce à un modèle d'apprentissage automatique ; et
déterminer le paramètre de déréverbération à l'aide du modèle d'apprentissage automatique.

3. Support de stockage lisible par machine selon la revendication 1, le balayage du signal de la pièce étant effectué à l'aide d'un capteur ultrasonique (222, 330) à une fréquence ultrasonique.

4. Support de stockage lisible par machine selon la revendication 1, les propriétés de la pièce comprenant les réflectances de surface de la pièce, les géométries de la pièce, les limites de la pièce, ou une combinaison de celles-ci.

5. Support de stockage lisible par machine selon la revendication 1, les instructions, lorsqu'elles sont exécutées par le processeur, amenant le processeur à : déterminer l'emplacement de la personne par rapport à une limite de la pièce à l'aide des informations de la caméra.

6. Support de stockage lisible par machine selon la revendication 1, les instructions, lorsqu'elles sont exécutées par le processeur, amenant le processeur à :
comparer les données issues du balayage du signal de la pièce et les informations de la caméra aux étiquettes prédéfinies de la pièce afin de déterminer les propriétés de la pièce ; ou
comparer les données issues du balayage du signal de la pièce et les informations de la caméra aux étiquettes de la pièce détectées afin de déterminer les propriétés de la pièce, les étiquettes de la pièce détectées étant déterminées à l'aide d'une diode électroluminescente infrarouge, DEL IR, ou d'un émetteur laser et d'une caméra ; ou
fournir les données issues du balayage du signal de la pièce et les informations de la caméra à un modèle d'apprentissage automatique pour déterminer les propriétés de la pièce, le modèle d'apprentissage automatique étant entraîné pour classer les données du balayage du signal et les informations de la caméra afin de déterminer les propriétés de la pièce.

7. Procédé (500) de déréverbération d'un signal audio, comprenant :
la détermination (510) de l'emplacement d'une personne dans une pièce, en partie sur la base d'informations fournies par une caméra ;
la capture (520), à l'aide d'un réseau de microphones, d'un signal audio reçu en provenance de l'emplacement de la personne à l'aide de la formation de faisceaux ;
la détermination (530) des propriétés de la pièce, en partie sur la base d'un balayage du signal ultrasonique de la pièce ;
la fourniture (540) de l'emplacement de la personne et des propriétés de la pièce à un modèle d'apprentissage automatique ;
la détermination (550) d'un paramètre de déréverbération basé sur le modèle d'apprentissage automatique ;
l'application (560) du paramètre de déréverbération au signal audio pour réduire la réverbération dans le signal audio en réponse à l'emplacement de la personne qui satisfait un critère d'emplacement ;
et
la transmission (570) du signal audio avec une réverbération réduite ;
**caractérisé en ce que**
le critère d'emplacement est satisfait lorsqu'une distance entre l'emplacement de la personne dans la pièce et le réseau de microphones est supérieure à un seuil défini.

8. Procédé selon la revendication 7, les propriétés de la pièce comprenant les réflectances de surface de la pièce, les géométries de la pièce, les limites de la pièce, ou une combinaison de celles-ci.

9. Procédé selon la revendication 7, comprenant l'entraînement du modèle d'apprentissage automatique pour déterminer les paramètres de déréverbération en fonction de l'emplacement relatif des personnes et des propriétés de la pièce.

10. Procédé selon la revendication 7, comprenant :
la comparaison des données issues du balayage du signal ultrasonique de la pièce avec des étiquettes prédéfinies de la pièce afin de déterminer les propriétés de la pièce ; ou
la comparaison des données issues du balayage ultrasonique de la pièce avec les étiquettes détectées pour déterminer les propriétés de la pièce, les étiquettes détectées étant déterminées à l'aide d'une diode électroluminescente infrarouge, DEL IR, ou d'un émetteur laser et d'une caméra (102, 132, 206, 310) ; ou
la fourniture des données issues du balayage ultrasonique de la pièce à un modèle d'apprentissage automatique pour déterminer les propriétés de la pièce, le modèle d'apprentissage automatique étant entraîné à classer les données de balayage ultrasonique et à déterminer les propriétés de la pièce.

11. Système de déréverbération de signal audio comprenant :
une caméra (102, 132, 206, 310) configurée pour capturer des informations de caméra pour une pièce ;
un réseau de microphones (106, 136) configuré pour capturer un signal audio reçu en provenance de l'emplacement d'une personne dans une pièce ;
un capteur ultrasonique (222, 330) configuré pour capturer des informations de balayage de signal pour la pièce ;
un support de stockage lisible par machine configuré pour stocker un modèle d'apprentissage automatique ; et
un processeur (340) configuré pour :
déterminer l'emplacement de la personne dans la pièce basé en partie sur les informations fournies par la caméra ;
capturer le signal audio reçu en provenance de l'emplacement où se trouve la personne à l'aide de la formation de faisceaux ;
déterminer les propriétés de la pièce basées en partie sur les informations de balayage du signal ;
fournir l'emplacement de la personne et les propriétés de la pièce au modèle d'apprentissage automatique ;
déterminer un paramètre de déréverbération à l'aide du modèle d'apprentissage automatique ;
appliquer le paramètre de déréverbération au signal audio pour réduire la réverbération dans le signal audio en réponse à l'emplacement de la personne qui satisfait un critère d'emplacement ;
et
transmettre le signal audio avec une réverbération réduite ;
**caractérisé en ce que**
le critère d'emplacement est satisfait lorsqu'une distance entre l'emplacement de la personne dans la pièce et le réseau de microphones est supérieure à un seuil défini.

12. Système selon la revendication 11, la caméra (102, 132, 206, 310) étant une caméra stéréo, une caméra à capteur de lumière structurée, ou une caméra à temps de vol.

13. Système selon la revendication 11, le système étant un système de vidéoconférence.
